# FASCICULE DE BREVET EUROPEEN

(11) **EP 0 725 602 B1**
(45) Date de publication et mention de la délivrance du brevet: **04.03.1998**
(21) Numéro de dépôt: 94931621.0
(22) Date de dépôt: 21.10.1994
(51) Int. Cl.: A61C 17/26

(54) **BROSSE A DENTS A DOUBLE SYSTEME ROTATIF DE BROSSAGE**
ZAHNBÜRSTE MIT DOPPELDREHPUTZSYSTEM
TOOTHBRUSH HAVING A DUAL ROTARY BRUSHING SYSTEM

(30) Priorité: 26.10.1993 FR 9313031; 20.09.1994 FR 9411538
(43) Date de publication de la demande: 14.08.1996
(73) Titulaire: Deleforges, Elisabeth, 75013 Paris (FR); Arnoux, Patrick, F-13004 Marseille (FR); Ferrer, Jean-Christophe, F-13600 La Ciotat (FR)
(72) Inventeur: ARNOUX, Patrick, F-13011 Marseille (FR); FERRER, Jean-Christophe, F-13600 La Ciotat (FR)
(74) Mandataire: Somnier, Jean-Louis
(86) Numéro de dépôt international: FR9401231
(87) Numéro de publication internationale: WO9511636

(56) Documents cités:
- EP-A- 0 488 971
- CH-A- 644 256
- DE-A- 4 207 686
- US-A- 4 060 870
- US-A- 4 313 237
- US-A- 4 377 877
- US-A- 5 173 983
- US-A- 5 177 827

## Description

La présente invention a pour objet une brosse à dents à double système rotatif de brossage.

Elle concerne d'une manière générale les domaines de l'hygiène buccale et des soins dentaires, en particulier humains, mais peut parfaitement s'adapter à un usage vétérinaire.

Depuis longtemps, tous les spécialistes s'accordent pour affirmer que le brossage des dents doit, pour être vraiment efficace, s'effectuer de la gencive vers l'extrémité de la dent, c'est-à-dire de haut en bas pour la mâchoire supérieure et de bas en haut pour la mâchoire inférieure.

Il existe à ce jour un grand nombre de types de brosses à dents électriques, à mouvements vibrants, alternatifs ou rotatifs. Par exemple, le brevet européen N° EP 0 488 971 décrit une brosse à dents électrique comportant deux brosses contrarotatives agencées pour agir sur le même flan de l'arcade dentaire. Il est bien évident que dans ce cas, si l'une des brosses travaille toujours dans le bon sens, l'autre agit obligatoirement dans le mauvais sens.

Aucun de ces appareils ne permet de garantir un brossage s'effectuant toujours dans le meilleur sens, à moins d'intégrer un système automatique inversant le sens de rotation en fonction de la position du dispositif dans la bouche, un tel système s'avérant complexe, onéreux et généralement peu fiable.

On connaît cependant, pour pallier ces inconvénients, des appareils de brossage de dents, comportant des brosses cylindriques à axes parallèles, animés de mouvements de rotation en sens inverse, et permettant d'insérer entre elles les dents à nettoyer de telle façon que chaque côté de celles-ci soit brossé dans le sens de la racine vers l'extrémité : on peut citer par exemple, dans cette catégorie d'appareils où se situe la présente invention, la demande de brevet FR 2489120 publiée le 5 mars 1982, qui décrit un tel appareil de brossage dont les brosses cylindriques sont écartées d'une distance constante supérieure à la largeur maximale d'une dent (de l'ordre de cinq millimètres comme indiqué dans la demande) et libres à leur extrémité distale, c'est-à-dire celle éloignée du manche dans lequel est logé le système d'entraînement en rotation desdites brosses par leur autre extrémité. Dans le même type d'appareils, on relève le brevet CH 644256 publié le 31 juillet 1984, dans lequel les brosses sont munies de tiges de section conique en matière synthétique dont l'élasticité permet d'obtenir une certaine pression contre les dents que l'on enserre entre elles. Les appareils de ce type comprennent nécessairement à moins de risquer d'obtenir un effet contraire au résultat escompté, un moyen de contrôle du sens de brossage, soit par un inverseur de rotation du moteur d'entraînement, soit par des raccords coudés imposant une position déterminée des brosses par rapport à l'arcade dentaire à nettoyer.

On note également le brevet EP 108097 publié le 20 janvier 1988, qui enseigne un appareil de brossage disposant de plusieurs modules interchangeables, dont l'un est à brosses tronconiques et un autre à trois brosses cylindriques, d'axes parallèles, courtes et de grand diamètre dont celle médiane permet le brossage du dessus des dents et l'ensemble étant logé dans un carter bien enveloppant : une telle disposition n'est cependant pas très efficace, car d'une part la brosse médiane a un mouvement de rotation antagoniste à celui d'une des brosses latérales et est donc contraire à une bonne efficacité de celle-ci et d'autre part, sa présence fixant une certaine hauteur d'application de l'appareil ne permet pas toujours une action sur toute la hauteur de dents jusqu'au niveau de la gencive.

En plus des inconvénients évoqués ci-dessus, ces appareils connus ont pour la plupart un écartement de brosse constant, ce qui d'une part nécessite de proposer plusieurs têtes ou plusieurs appareils suivant l'utilisateur (enfants, adultes...) et d'autre part ne permet pas pour un même utilisateur une efficacité de brossage homogène pour toute sa dentition compte tenu des différences d'épaisseur des dents (molaires, prémolaires, canines, ...) ; et dans les appareils du type décrit dans le brevet CH 644256 qui sont les seuls à permettre un écartement des brosses du fait du montage de celles-ci sur des arbres flexibles mais tenus à leur seule embase, outre l'inconvénient du contrôle de sens de brossage évoqué précédemment, ils ne permettent pas un appui homogène sur les dents puisque leur écartement ne peut pas s'adapter à la largeur des dents sur toute leur longueur et une telle disposition induit de toute façon des efforts de flexion et de cisaillement sur les arbres d'entraînement qui sont alors endommagés à la longue.

Pour essayer de résoudre ces difficultés, on relève la demande de brevet FR 2662598 publiée le 6 décembre 1991, qui décrit un appareil de brossage de dents du type de celui décrit dans la demande FR 2489120 citée précédemment comportant deux brosses contrarotatives d'axes rigides, libres à leurs extrémités distales et maintenues par celles opposées assurant leur entraînement : le carter qui les reçoit comprend un guide dans lequel l'une des extrémités des brosses est déplaçable en écartement de l'autre suivant un arc de cercle garantissant la continuité de son entraînement autour et par un engrenage, et grâce à un dispositif à câble et à ressort ; l'objectif de cet appareil est alors de s'adapter à toute épaisseur de dent et de maintenir une pression constante sur celle-ci et d'une manière quasi homogène sur toute la longueur des brosses qui doivent pour cela rester en effet quasi parallèles pendant le brossage. Ceci est également un des objectifs de la présente invention mais la solution enseignée dans ce document antérieur est très complexe, n'est pas fiable, nécessite une manoeuvre de l'utilisateur lors de la mise en place de l'appareil dans sa bouche, ce qui n'est pas très incitatif à l'utiliser et n'est pas une garantie de bon résultat.

On note également le brevet allemand DE 4 207 686 qui expose toutes les caractéristiques du préambule de la revendication 1. Il décrit une tête de brossage pour une brosse à dents électrique, comportant deux blocs renfermant chacun trois petites brossettes pouvant envelopper ensemble les dents, chaque bloc étant constitué d'un carter articulé suivant un axe vertical par rapport au manche; ainsi, un tel système n'autorise qu'une ouverture divergente des blocs de brosses, oblige à réduire la longueur des poils du fait des trois brosses très proches les unes des autres et crée un effet de rotation antagoniste entre deux desdites brosses, tout ceci étant néfaste à l'efficacité des brosses.

Le dispositif selon la présente invention a pour objectif de satisfaire tous les critères pour une bonne efficacité de brossage et de remédier aux inconvénients relevés dans les appareils connus. Il permet en effet d'assurer un brossage ayant toujours lieu dans le sens idéal, sans être obligé de le vérifier et sans inversion du sens de marche, d'effectuer simultanément le nettoyage des deux côtés de l'arcade dentaire ce qui entraîne une réduction certaine du temps de brossage, de permettre le brossage de la face occlusale puis celui des faces latérales verticales des arcades dentaires, sans intervention de l'utilisateur, et quelle que soit l'épaisseur de ses dents, et cela à pression constante et d'une manière quasi homogène sur toute la longueur des brosses, avec un bon dégagement d'évacuation des particules pouvant être arrachées par les brosses hors de la surface traitée, et en utilisant un montage mécanique simple, fiable et d'un coût raisonnable.

Une telle brosse à dents mécanique suivant l'invention, à double système rotatif de brossage, comporte un corps formant manche et une tête fixée sur ledit manche, laquelle tête étant pourvue de deux brosses contrarotatives de forme cylindrique, adjacentes et d'axes sensiblement parallèles, et telle que les deux dites brosses sont supportées au moins chacune à leur extrémité distale par un palier et entraînées chacune par un arbre flexible situé dans la tête et supporté au moins par un palier; les arbres portant lesdites brosses sont, suivant l'invention, flexibles, et chacun des deuxdits paliers qui les supportent, l'un situé à leur extrémité distale et l'autre du côté du corps étant monté sur un support permettant l'écartement des deux brosses l'une par rapport à l'autre, et assurant alors le rapprochement de l'une vers l'autre par effet de rappel ; ladite tête comporte ainsi, soit un carter ouvert, soit des bras permettant de porter lesdits supports et situé par rapport aux brosses du côté où les génératrices extérieures de celles-ci s'éloignent les unes des autres lors de leur rotation, laissant ainsi complètement libre le côté opposé.

De préférence, ladite tête est interchangeable en s'encliquetant sur ledit manche et suivant un mode de réalisation, les deux brosses cylindriques contrarotatives adjacentes sont guidées par des paliers portés par deux supports comportant chacun deux lames flexibles ou ressorts métalliques tels que décrits ci-après.

Entre le deuxième support et le manche, qui sont normalement assez distants l'un de l'autre pour permettre la pénétration des brosses jusqu'à l'arrière de la dentition alors que le manche reste à l'extérieur de la bouche, lesdits arbres flexibles sont de préférence inclinés vers le haut, c'est-à-dire vers le fond du carter ou vers les bras supports, lesquels dégagent alors dans cette partie un espace ouvert au moins sur trois côtés ; cette inclinaison est bien sûr possible sans moyen mécanique de renvoi d'angle du fait de la flexibilité desdits arbres.

Lesdites brosses sont ainsi agencées de manière à effectuer dans un premier temps le brossage de la face occlusale, puis de permettre, dans un deuxième temps, aux brosses de s'écarter pour laisser passer les dents entre elles, tout en assurant un brossage simultané à pression quasi constante, des deux faces verticales des arcades dentaires et s'opérant toujours dans une direction allant de la gencive vers l'extrémité des dents.

Selon un mode de réalisation particulier, les brosses sont remplacées par des cylindres pourvus de doigts en caoutchouc ou en élastomère destinés au lustrage des dents à l'aide d'une pâte à polir.

Le résultat est une nouvelle brosse à dents mécanique à double système rotatif de brossage satisfaisant aux inconvénients des dispositifs existant à ce jour et permettant d'atteindre les objectifs définis précédemment, d'une part en utilisant des éléments déjà connus de l'art antérieur et du domaine public et, d'autre part, des éléments spécifiques, nouveaux et innovants, tels qu'en particulier l'entraînement des brosses par des arbres flexibles tenus eux-mêmes par un ou plusieurs supports élastiques et déformables permettant d'une part l'écartement desdites brosses pour s'adapter à toute dentition et d'autre part de maintenir une pression constante d'appui sur lesdites dents pendant le brossage, et cela d'une manière la plus homogène possible sur toute la longueur des brosses et sur toute la hauteur des dents jusqu'à la gencive elle-même, d'une manière très simple, sans mécanisme complexe, et permettant même l'interchangeabilité des brosses seules sans nécessiter de changer l'ensemble de la tête elle-même. Une telle disposition permet de bien séparer et donc de bien contrôler la fonction d'appui à pression constante des brosses grâce à leurs supports élastiques, de celle d'entraînement de ces brosses grâce aux arbres flexibles qui, d'une part coopèrent avec lesdits supports pour ne pas entraver la fonction de ceux-ci, et d'autre part transmettent le couple de rotation moteur sans effort préjudiciable au système d'entraînement.

De plus, l'inclinaison possible et la flexibilité des arbres entre le manche et les brosses permet de bien descendre celles-ci le long des dents, même sur leur face intérieure, car la partie d'arbre flexible qui chevauche obligatoirement alors les dents situées entre celles que l'on brosse et l'extérieur de la bouche, peut alors passer au-dessus ou entre deux dents écartées en se déformant si nécessaire, ce que ne permet aucun des dispositifs connus à ce jour.

Suivant la présente invention, il n'est pas nécessaire de disposer d'un carter quasi-fermé de protection autour des brosses, ce qui peut permettre simultanément au brossage des dents, d'effectuer celui des joues et des côtés de la langue. Un carter quasi fermé est en fait surtout utile pour supporter des buses de projection de fluide et en ce cas, il reste de toute façon très ouvert dans l'espace prévu entre les brosses et le manche pour dégager les axes flexibles et permettre leur chevauchement de la dentition comme indiqué précédemment ; suivant les caractéristiques de l'invention, les poils des brosses peuvent être également de longueur et de diamètre variable, permettant alors en combinaison avec les autres caractéristiques de l'invention de pouvoir nettoyer les espaces interdentaires avec des poils suffisamment longs.

On pourrait citer d'autres avantages de la présente invention mais ceux cités ci-dessus en montrent déjà suffisamment pour en prouver la nouveauté et l'intérêt.

La description et les dessins annexés sont donnés à titre d'exemple non limitatif de quelques formes de réalisation de l'objet de l'invention :
La Figure 1 représente en coupe partielle suivant DD' de la Figure 2, longitudinalement, une brosse dans son ensemble, vue de dessous ou de face.
La Figure 2 montre une brosse suivant l'invention en vue de côté, soit suivant l'exemple de réalisation de la Figure 1, soit suivant un autre mode de réalisation décrit ci-après dans la Figure 4B.
La Figure 3 est une vue de face agrandie d'un autre exemple de réalisation de la tête suivant l'invention.
La Figure 4A est une vue en coupe suivant CC' de la Figure 1.
La Figure 4B est une vue en coupe suivant BB' d'un exemple de réalisation suivant la Figure 2.
La Figure 4C est une vue en coupe suivant DD' de la Figure 3.
Les Figures 5 et 6 sont des coupes transversales d'une tête montrant la position des brosses en cours d'utilisation respectivement sur la mâchoire inférieure et sur la mâchoire supérieure.

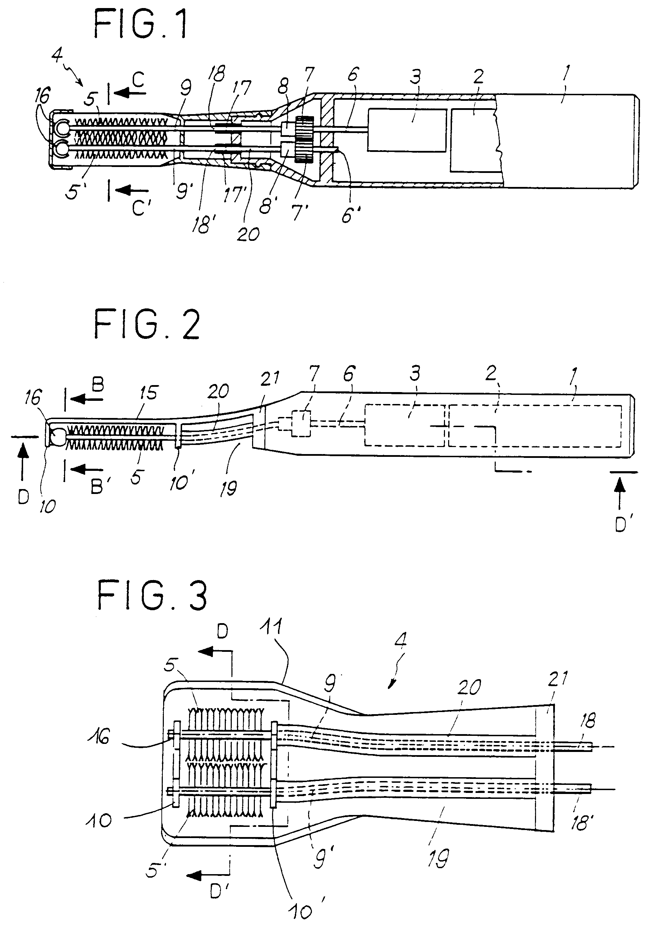

Le dispositif ou la brosse suivant l'invention, tels que représentés sur les Figures 1 à 6, est constitué d'un corps 1 creux servant de manche, dans lequel sont logés un transformateur pour une alimentation extérieure éventuelle et/ou un accumulateur électrique et/ou une batterie, 2, alimentant un moteur 3, et d'une tête 4 qui peut être déconnectable pour être interchangeable, s'encliquetant sur le corps 1 et pourvue à son extrémité de deux brosses 5, 5' rotatives de forme cylindrique, adjacentes et d'axes sensiblement parallèles.

Les sections transversales du corps 1 et de la tête 4 sont de préférence de forme ovale, afin de faciliter la tenue de l'appareil et son orientation dans la bouche.

Le moteur 3 entraîne un premier axe primaire 6 qui entraîne à son tour, en sens inverse, un second axe primaire 6' par l'intermédiaire de deux engrenages 7, 7'. Associé à ceux-ci ou aux manchons 17 décrits ci-après, un dispositif limiteur de couple de type embrayage à friction, peut être disposé pour éviter tout effort trop important en cas de blocage d'une des brosses entre deux dents par exemple, afin d'éviter d'abîmer celles-ci ou le système d'entraînement du moteur. Deux embouts femelles 8, 8' respectivement solidaires des deux engrenages 7, 7', transmettent le mouvement de rotation à deux arbres dont une partie au moins 9 et 9' située dans la tête 4 est flexible et entraîne respectivement les brosses 5, 5'. Ces parties d'arbres flexibles, qui sont sensiblement parallèles et qui peuvent être légèrement coniques ou inclinées aussi bien dans le plan horizontal que vertical représentés sur les Figures 2 et 3, sont terminées à leur extrémité 18, 18' opposée aux brosses 5, 5', soit situées du côté du manche 1, par un manchon 17 dans lequel ils s'engagent et coopèrent de manière à être entraînés par eux lorsque la tête est montée sur le corps 1 ; lesquels manchons 17, 17' peuvent être solidaires d'autres parties 20 d'arbres entraînées par les embouts 8, 8' des engrenages 7, 7'. Suivant des modes de réalisation, ces manchons 17, 17' et embouts femelles 8, 8' peuvent être confondus : tel que représenté par exemple sur les Figures 2 et 3, les extrémités 18, 18' desdits arbres 9, qui sont alors constitués d'une seule partie flexible, peuvent s'engager directement dans les manchons 8 lors de la mise en place de la tête 4 sur le manche 1.

Dans la représentation préférentielle suivant la Figure 2, où les axes des arbres 9, 9' sont montrés décalés par rapport à l'axe du moteur d'entraînement 3, l'ensemble de chaque arbre est flexible depuis son extrémité distale jusqu'à son emmanchement dans l'un des embouts 8, 8' des engrenages 7, 7', et est donc constitué d'une seule partie sans manchon intermédiaire 17, 17' comme également représenté dans la Figure 3 : c'est la flexibilité de ces arbres 9, 9' qui assure alors le rattrapage du décalage d'axes dans l'espace 19 ouvert au moins sur trois côtés en cet endroit pour permettre la pénétration des brosses jusqu'à la base de la dentition, alors que le manche reste à l'extérieur de la bouche, comme indiqué précédemment.

Lesdits arbres flexibles entre le deuxième support 10' et l'extrémité 21 de la tête 4 qui coopère avec le manche 1 passe de préférence à l'intérieur d'une gaine fixe et également flexible qui est fixée à ses deux extrémités sur ledit support 10' et l'extrémité 21 de la tête, afin d'éviter tout risque de coincement desdits arbres flexibles en rotation entre les dents et d'abîmer celles-ci.

Les poils des brosses 5, 5' sont implantés de manière rectiligne ou hélicoïdale. Ils sont de longueur et de diamètres variables, dans le but d'optimiser le brossage.

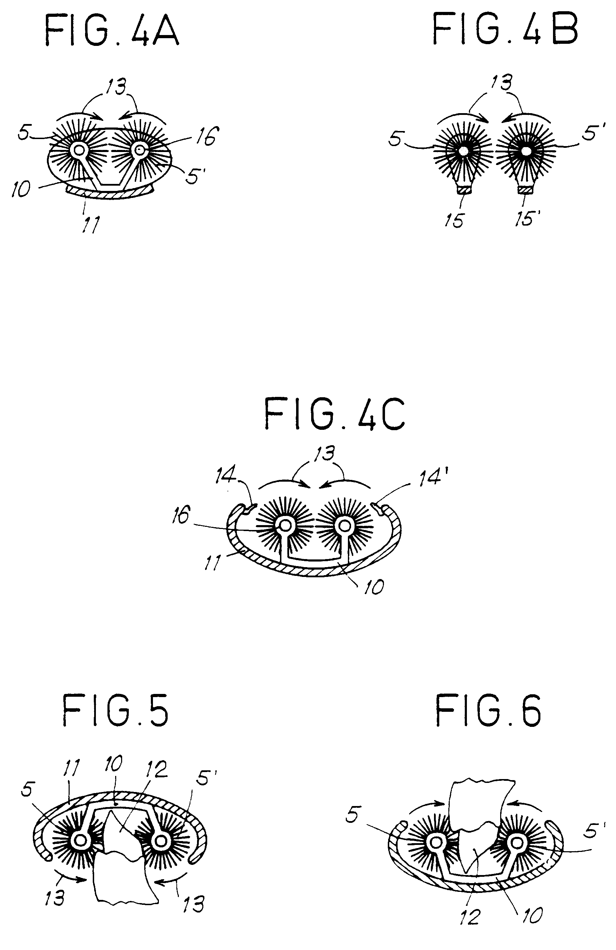

Les arbres flexibles 9, 9' sont guidés chacun par au moins un palier 16 à leur extrémité distale, soit celle la plus éloignée du manche ou corps 1 : ces paliers sont montés sur un support 10 permettant l'écartement des deux brosses l'une par rapport à l'autre et assurant alors le rapprochement de l'une vers l'autre par effet de ressort dû soit à l'élasticité d'un support commun 10 tel que représenté sur les Figures 4A ou 4C par exemple, soit à celle des bras 15, 15' portant chacun un support comme représentés sur la Figure 4B.

En effet, dans un mode de réalisation suivant les Figures 2, 3, 4A, 4C, 5 et 6, ladite tête 4 comporte des supports communs 10, 10' en forme de U, qui peuvent être situés de part et d'autre des brosses 5, 5' à l'intérieur d'un carter 11 plus ou moins ouvert, prolongeant la tête 4 : ce carter 11 qui peut être réalisé dans un matériau semi-rigide tel qu'en matière plastique permettant une certaine souplesse et déformation, entoure au moins partiellement lesdites brosses 5, 5' du côté où leurs génératrices extérieures s'éloignent les unes des autres lors de leur rotation et est au moins ouvert sur tout le côté opposé ; il peut cependant se refermer légèrement vers ce côté, comme représenté sur les Figures 4C, 5 et 6 pour assurer la protection des muqueuses et de la langue contre les effets des brosses mais comme indiqué précédemment, et tel que représenté sur la Figure 4A et à plus forte raison sur la Figure 4B, suivant des modes préférentiels de réalisation de la présente invention, on peut vouloir rechercher l'effet inverse de brossage desdites muqueuses et de la langue et ledit carter est au contraire le plus ouvert possible, mais toujours présent du côté indiqué ci-dessus pour imposer une seule orientation de l'appareil lors de sa mise en place sur les dents, et donc le sens du brossage.

Les deux branches de chacun des supports communs 10, 10' sont constituées de lames flexibles en matière plastique qui peut être moulée dans la même matière que le moyen de liaison les rendant solidaires du manche, indépendamment des brosses elles-mêmes, tel que le carter 11 décrit ci-dessus ou les bras 15 décrits ci-dessous, ou de ressorts métalliques fixés alors sur ledit moyen de liaison, de manière à permettre aux brosses de s'écarter pour laisser passer les dents 12 entre elles, et leur base est fixée à l'intérieur dudit carter 11.

Cette particularité constitue un des points essentiels de la présente invention. En effet, le nettoyage des dents s'effectue en appuyant la tête de l'appareil sur celles-ci de façon à ce que la face occlusale soit d'abord brossée et que les dents passent ensuite entre les deux brosses 5, 5' en les écartant, les sens de rotation des arbres flexibles 9, 9', indiqués sur les figures par les flèches 13, étant tels que le brossage s'opère toujours dans une direction allant de la gencive vers l'extrémité des dents, sans nécessiter de système d'inversion du sens de rotation. L'élasticité des supports flexibles 10, 10' est déterminé pour que la pression des brosses sur les dents soit optimale et la disposition desdits supports 10, 10' au moins à leur extrémité distale, et de préférence de part et d'autre desdites brosses, permet un maintien de cette pression sur l'ensemble de celles-ci qui vont donc épouser au mieux le profil des faces de la dentition à brosser, du fait également de la propre élasticité de leurs arbres d'entraînement, soit en fait d'une manière quasi parallèle si l'épaisseur de celle-ci est quasi constante dans la zone concernée.

Dans le cas d'un carter semi-fermé tel que représenté sur la Figure 4C, l'action du brossage peut éventuellement être complétée par des buses 14 prévues dans la tête 4 et projetant un liquide sur les dents 12, par exemple de l'eau additionnée de bicarbonate.

Suivant un autre mode de réalisation tel que représenté sur la Figure 4B qui peut être la vue en coupe suivant BB' de la Figure 2, ladite tête 4 peut comporter deux bras déformables et élastiques 15, 15' situés par rapport aux arbres 9, 9' des brosses du même côté où les génératrices extérieures de celles-ci s'éloignent les unes des autres lors de leur rotation, chacun de ces bras portant à son extrémité distale un desdits supports 10 : en ce cas, ce sont les bras eux-mêmes qui permettent l'écartement des brosses l'une par rapport à l'autre et d'assurer alors leur rapprochement par un effet de rappel, les supports 10 indépendants étant situés aux extrémités desdits bras, pouvant être alors rigides, et supportant uniquement des paliers 16.

Pour en particulier permettre un démontage et une interchangeabilité des brosses 5, 5' seules sans avoir à déconnecter ou changer ladite tête 4, lesdits paliers 16 supportant les extrémités distales desdites brosses 5, 5' sont en forme de rotules femelles creuses coopérant avec lesdites extrémités elles-mêmes en forme de rotules mâles pouvant être déconnectées alors desdits paliers 16 : cette forme particulière de palier peut être adaptée du reste à toute forme de réalisation suivant les Figures jointes, l'autre extrémité 18 des arbres 9, 9' du côté du manche 1 devant alors s'enfiler dans l'autre support 10' quand celui-ci est présent, pour ensuite s'engager dans lesdits manchons 17, ou directement dans les embouts 8 femelles des engrenages 7, 7'.

En effet, comme indiqué précédemment et dans des modes de réalisation préférentiels tels que sur les Figures 2 ou 3, les arbres 9, 9' desdites brosses 5, 5' sont également supportées chacune du côté du corps 1 ou manche par au moins un autre palier monté donc sur au moins un deuxième support 10' : ce support peut être alors commun aux deux brosses, même dans le cas de l'exemple de réalisation avec des bras tels que représentés sur la Figure 4B ; ce support peut être le même que celui décrit pour supporter les extrémités distales comme précédemment explicité sur la Figure 3, ainsi que 4A, 4C et suivantes.

On pourra prévoir des têtes 4 dans lesquelles les brosses 5, 5' sont remplacées par des cylindres pourvus de doigts en caoutchouc ou en élastomère et destinés au lustrage des dents à l'aide d'une pâte à polir.

## Revendications

1. Brosse à dents mécanique à double système rotatif de brossage comportant un corps (1) formant manche et une tête (4) fixée sur ledit manche, laquelle tête étant pourvue de deux brosses (5, 5') contrarotatives de forme cylindrique, adjacentes, d'axes sensiblement parallèles, supportées au moins chacune à leur extrémité distale par un palier (16) et entraînées chacune par un arbre flexible situé dans la tête (4) et supporté au moins par un palier, caractérisée en ce que les arbres (9, 9') portant lesdites brosses (5, 5') sont flexibles et chacun des deuxdits paliers qui les supportent, l'un situé à leur extrémité distale et l'autre du côté du corps (1) étant monté sur un support (10, 10') permettant l'écartement des deux brosses l'une par rapport à l'autre et assurant alors le rapprochement de l'une vers l'autre par effet de rappel.

2. Brosse à dents mécanique suivant la revendication 1, caractérisée en ce que ladite tête (4) comporte un carter (11) entourant au moins partiellement les brosses (5, 5') du côté où les génératrices extérieures de celles-ci s'éloignent les unes des autres lors de leur rotation et au moins ouvert sur tout le côté opposé, et les au moins deux dits paliers (16) sont montés aux deux extrémités des branches d'un support (10) en forme de U dont lesdites branches sont constituées de lames ou ressorts flexibles et la base est fixée à l'intérieur dudit carter (11).

3. Brosse à dents mécanique suivant la revendication 1, caractérisée en ce que ladite tête (4) comporte deux bras déformables et élastiques (15, 15') situés par rapport aux arbres (9, 9') des brosses du même côté où les génératrices extérieures de celles-ci s'éloignent lors de leur rotation, chacun de ces bras portant en son extrémité distale un desdits supports (10).

4. Brosse à dents mécaniques suivant l'une quelconque des revendications 1 à 3, caractérisée en ce que lesdits paliers (16) supportant les extrémités distales des arbres (9, 9') desdites brosses (5, 5') sont en forme de rotules femelles creuses coopérant avec lesdites extrémités, elles-mêmes en forme de rotules mâles pouvant être déconnectées desdits paliers (16).

5. Brosse à dents mécanique suivant l'une quelconque des revendications 1 à 4, caractérisée en ce que entre le support (10') des paliers d'arbres du côté du corps (1) et celui-ci, lesdits arbres (9,9') sont inclinés vers le haut, c'est-à-dire vers le fond du carter (11) ou vers les bras (15,15'), lesquels dégagent dans cette partie un espace (19) ouvert au moins sur trois côtés.

6. Brosse à dents suivant l'une quelconque des revendications 1 à 5, caractérisée en ce que les poils des brosses (5, 5') sont de longueurs et de diamètres variables.

7. Brosse à dents suivant l'une quelconque des revendications 1 à 6, caractérisée en ce que la tête (4) comporte des buses (14) permettant de projeter un liquide sur les dents (12).

8. Brosse à dents suivant l'une quelconque des revendications 1 à 7, caractérisée en ce que l'effet de rappel des supports flexibles (10,10') l'un vers l'autre est déterminé pour que la pression des brosses sur les dents soit constante pour une bonne efficacité de brossage.

9. Brosse à dents suivant l'une quelconque des revendications 1 à 8, caractérisée en ce que les arbres flexibles (9, 9') sont terminés à leur extrémité, située du côté du manche, par un embout coopérant et s'engageant dans des manchons (17,17') reliés à au moins deux engrenages (7, 7') entraînés par un moteur électrique (3) situé dans ledit manche (1) et de manière à être entraînés par eux, ladite tête (4) étant montée sur ledit manche (1) et étant déconnectable.

## Claims

1. A mechanical toothbrush with a dual rotary brushing system, comprising a handle-forming body (1) and a head (4) fixed on said handle, which head is provided with two adjacent contra-rotating brushes (5, 5') of cylindrical shape, having axes that are substantially parallel, each supported, at least at their distal end, by a respective bearing (16), and each driven by a flexible shaft situated inside the head (4) and supported, at least by a respective bearing, characterised in that the shafts (9, 9') carrying said brushes (5, 5') are flexible, and each of said two bearings which support them, one situated at its distal end and the other adjacent to the body (1), is mounted on a support (10, 10') that enables the two brushes to move apart one relative to the other, then ensuring that they are urged towards each other by a return effect.

2. A mechanical toothbrush according to claim 1, characterised in that said head (4) includes a case (11) surrounding the brushes (5, 5') at least in part on the side where their outer generator lines move away from one another during rotation, and that is open at least on the opposite side, with said at least two bearings (16) being mounted at the two ends of the branches of a U-shaped support (10) with said branches being constituted by flexible springs or blades and with the base thereof being fixed to the inside of said case (11).

3. A mechanical toothbrush according to claim 1, characterised in that said head (4) includes two deformable and resilient arms (15, 15') situated on the same side of the shafts (9, 9') of the brushes as the outer generator lines thereof that move away from each other during rotation, each of said arms carrying one of said supports (10) at its distal end.

4. A mechanical toothbrush according to any one of claims 1 to 3, characterised in that said bearings (16) supporting the distal ends of the shafts (9, 9') of said brushes (5, 5') are in the form of hollow female sockets for ball-and-socket joints co-operating with said ends which are themselves in the form of male balls suitable for being disconnected from said bearings (16).

5. A mechanical toothbrush according to any one of claims 1 to 4, characterised in that between the support (10') of the shaft bearings situated adjacent to the body (1) and said body, said shafts (9, 9') are upwardly inclined, i.e. towards the back of the case (11) or towards the arms (15, 15'), which arms leave a space (19) in said portion, which space is open on at least three sides.

6. A toothbrush according to any one of claims 1 to 5, characterised in that the bristles of the brushes (5, 5') are of varying lengths and diameters.

7. A toothbrush according to any one of claims 1 to 6, characterised in that the head (4) includes nozzles (14) enabling a liquid to be sprayed on the teeth (12).

8. A toothbrush according to any one of claims 1 to 7, characterised in that the return force of the flexible supports (10, 10') urging one towards the other is determined so that the pressure applied by the brushes against the teeth is constant for a good brushing effectiveness.

9. A toothbrush according to any one of claims 1 to 8, characterised in that the flexible shafts (9, 9') are terminated at their handle ends by respective endpieces that co-operate with and engage in sleeves (17, 17') connected to at least two gear wheels (7, 7') that are driven by an electric motor (3) situated in said handle (1) and in such a manner as to be driven thereby, said head (4) being mounted on said handle (1) and being disconnectable therefrom.

## Patentansprüche

1. Mechanische Zahnbürste mit doppeltem Dreh-Bürstsystem, mit einem einen Handgriff bildenden Körper (1) und einem auf dem genannten Handgriff befestigten Kopf (4), wobei der genannte Kopf mit zwei gegenläufig drehbaren, zylinderförmigen, nebeneinanderliegenden Bürsten (5, 5') mit im wesentlichen parallelen Achsen versehen ist, die mindestens an ihren distalen Enden in einem Lager (16) gelagert sind und jeweils durch eine flexible Welle angetrieben sind, die im Kopf (4) sitzt und durch mindestens ein Lager gelagert ist, dadurch gekennzeichnet, daß die Wellen, (9, 9'), die die genannten Bürsten (5, 5') tragen, flexibel sind, und daß jedes der genannten beiden Lager, von denen das eine am distalen Ende und das andere auf der Seite des Körpers (1) gelegen ist, auf einem Träger (10, 10') angebracht ist, der die Auseinanderspreizung der beiden Bürsten gestattet und und dann durch Rückstellwirkung ihre gegenseitige Annäherung sicherstellt.

2. Mechanische Zahnbürste nach Anspruch 1, dadurch gekennzeichnet, daß der genannte Kopf (4) ein Gehäuse (11) aufweist, das die Bürsten (5, 5') auf der Seite mindestens teilweise umgibt, auf der bei deren Drehung deren äußere Erzeugenden auseinanderlaufen, und mindestens auf der gesamten gegenüberliegenden Seite offen ist, und daß mindestens die genannten beiden Lager (16) an den beiden Enden der Schenkel eines U-förmigen Trägers (10) angebracht sind, bei dem die genannten Schenkel aus flexiblen Zungen oder Federn gebildet sind und die Basis im Inneren des genannten Gehäuses (11) befestigt ist.

3. Mechanische Zahnbürste nach Anspruch 1, dadurch gekennzeichnet, daß der genannte Kopf (4) zwei verformbare und elastische Arme (15, 15') aufweist, die bezüglich der beiden Wellen (9, 9') der Bürsten auf derselben Seite gelegen sind, auf der bei deren Drehung deren äußere Erzeugenden auseinanderlaufen, wobei jeder dieser Arme an seinem distalen Ende einen der genannten Träger (10) trägt.

4. Mechanische Zahnbürste nach irgendeinem der Ansprüche 1 bis 3, dadurch gekennzeichnet, daß die genannten Lager (16), die die distalen Enden der Wellen (9, 9') der genannten Bürsten (5, 5') tragen, in Form hohler Gelenkpfannen vorliegen, die mit den genannten Enden zusammenwirken, die ihrerseits, in Form von Gelenkkugeln, aus der Verbindung mit den genannten Lagern (16) gelöst werden können.

5. Mechanische Zahnbürste nach irgendeinem der Ansprüche 1 bis 4, dadurch gekennzeichnet, daß zwischen dem Träger (10') der Lager der Wellen auf der Seite des Körpers (1) und diesem die genannten Wellen (9, 9') nach oben geneigt sind, d. h. zum Boden des Gehäuses (11) hin oder zu den Armen (15, 15') hin, wobei diese in diesem Abschnitt einen Raum (19) abteilen, der nach mindestens drei Seiten hin offen ist.

6. Mechanische Zahnbürste nach irgendeinem der Ansprüche 1 bis 5, dadurch gekennzeichnet, daß die Borsten der Bürsten (5, 5') variable Länge und variablen Durchmeser aufweisen.

7. Mechanische Zahnbürste nach irgendeinem der Ansprüche 1 bis 6, dadurch gekennzeichnet, daß der Kopf (4) Düsen (14) aufweist, die das Ausspritzen einer Flüssigkeit auf die Zähne (12) gestatten.

8. Mechanische Zahnbürste nach irgendeinem der Ansprüche 1 bis 7, dadurch gekennzeichnet, daß die Rückstellwirkung der flexiblen Träger (10, 10') aufeinander zu so bestimmt ist, daß der Andruck der Bürsten gegen die Zähne für eine gute Bürstwirkung gleichmäßig ist.

9. Mechanische Zahnbürste nach irgendeinem der Ansprüche 1 bis 8, dadurch gekennzeichnet, daß die flexiblen Wellen (9, 9') an ihrem auf der Seite des Handgriffs gelegenen Ende durch einen Ansatz abgeschlossen sind, der mit Muffen (17, 17') zusammenwirkt und in diese eingreift, die mit mindestens zwei Zahnrädern (7, 7') verbunden sind, die durch einen Elektromotor (3) angetrieben sind, der im genannten Handgriff (1) sitzt, und derart, daß sie durch diese angetrieben werden, wobei der genannten Kopf (4) auf dem genannten Handgriff (1) angebracht ist und lösbar ist.
